# EUROPÄISCHE PATENTSCHRIFT

(11) **EP 0 710 818 B1**
(45) Veröffentlichungstag und Bekanntmachung des Hinweises auf die Patenterteilung: **08.09.1999**
(21) Anmeldenummer: 94810641.4
(22) Anmeldetag: 07.11.1994
(51) Int. Cl.: G01D 5/34

(54) **Schussfadenfödervorrichtung**
Device for feeding weft yarn
Dispositif fournisseur de fil de trame

(43) Veröffentlichungstag der Anmeldung: 08.05.1996
(73) Patentinhaber: SULZER RÜTI AG, CH-8630 Rüti (CH)
(72) Erfinder: Dietmar, Markward, CH-8630 Rüti (CH); Marcel, Christe, CH-8630 Rüti (CH)
(74) Vertreter: Heubeck, Bernhard

(56) Entgegenhaltungen:
- DE-A- 2 814 280
- GB-A- 2 101 296
- GB-A- 2 192 708
- US-A- 5 083 584

## Beschreibung

Die Erfindung betrifft eine Schussfadenfördervorrichtung gemäss Anspruch 1.

Eine Anordnung zum Abtasten von bewegten Gegenständen ist aus der GB-A-2 101 296 bekannt. Diese Anordnung enthält ein Leuchtelement, um Licht in einem Abstrahlungsbereich mit vorgegebenen Raumwinkel abzustrahlen, ein lichtempfindliches Element, um Licht in einem Empfindlichkeitsbereich zu empfangen und in Abhängigkeit des empfangenen Lichts ein Ausgangssignal abzugeben und einen Reflektor, der in einem Abstand von dem Leuchtelement und dem lichtempfindlichen Element angeordnet ist, wobei der abzutastende Gegenstand in einer zwischen den letztgenannten Elementen und dem Reflektor liegenden Ebene bewegt wird.

Weiterhin ist aus der DE-A-2 814 280 eine Schußfadenfördervorrichtung bekannt, bei der die Schußfadenspule auf ihrer Mantelfläche einen reflektierenden Überzug aufweist. Eine Lichtquelle, der Überzug und eine Fotozelle bilden eine Lichtschranke, die zur Überwachung der Vorrichtung auf Fadenbruch dient.

Diese Anordnung ist nicht geeignet, die Breite eines Schussfadenwickels abzutasten.

Der Erfindung liegt die Aufgabe zugrunde, eine Anordnung zum Abtasten eines einlagigen Schussfadenwickels zu schaffen, mit welcher die Aenderung der Breite eines Schussfadenwickels und dessen Bewegung überwacht wird.

Diese Aufgabe wird erfindungsgemäss durch die Vorrichtung gemäß Anspruch 1 gelöst.

Die Vorteile der Erfindung sind im einfachen Aufbau und der Betriebssicherheit der Anordnung zu sehen.

Im folgenden wird die Erfindung anhand von Ausführungsbeispielen weiter beschrieben. Es zeigen:
- Fig. 1: eine schematische Anordnung mit optischem Sensor und optischem Strahlengang;
- Fig. 2: eine schematische Darstellung des Verlaufs der Empfindlichkeit des Sensors 1 in Abhängigkeit des Abstandes der Reflektionsfläche vom Sensor 1 und
- Fig. 3: eine schematische Darstellung eines weiteren Ausführungsbeispiels einer Anordnung mit optischem Sensor zur Ueberwachung des Schussfadens einer Schussfadenfördervorrichtung.

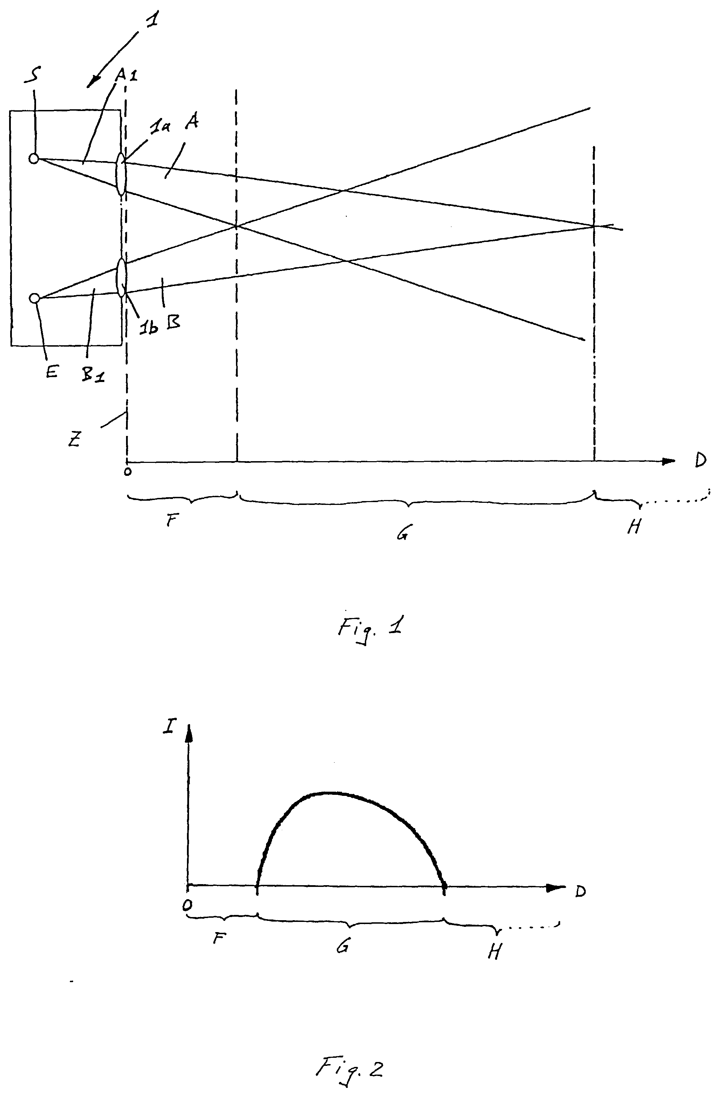

Fig. 1 zeigt einen optischen Sensor 1, der ein Leuchtelement S aufweist, dessen Licht über einen Fokussierungsbereich A1 und einen Linsenkörper la in einen Aussenraum dringt, wobei das Licht in einem Abstrahlbereich A, der durch einen vorgegebenen Raumwinkel bestimmt ist, abgestrahlt wird. Weiter weist der optische Sensor 1 ein Fotoelement E auf, dessen Anordnung zusammen mit dem Linsenkörper 1b einen Empfindlichkeitsbereich B oder Empfangsbereich B mit einem entsprechend vorgegebenen Raumwinkel festlegt. Die beiden Linsenkörper 1a und 1b sind in einer Ebene angeordnet und definieren dabei eine Ebene Z mit einem Nullpunkt 0. In Fig. 1 ist senkrecht zu dieser Ebene die Distanz D eingetragen. Der Abstrahlbereich A und der Empfangsbereich B breiten sich bei vorgegebenem Raumwinkel ausgehend vom Nullpunkt 0 in Richtung der Distanz D aus, wobei der Verlauf des Abstrahlbereiches A sowie des Empfangsbereiches B derart gewählt ist, dass sich ein erster Abstandsbereich F ergibt, innerhalb dessen sich die beiden Abstrahl- und Empfangsbereiche A, B nicht überschneiden, und einen zweiten entfernteren Abstandsbereich G, innerhalb dessen sich die beiden Abstrahl- und Empfangsbereiche A, B überschneiden. Weiter in Richtung D gibt es anschliessend an den zweiten, entfernteren Abstandsbereich G einen weiteren Abstandsbereich H, innerhalb dessen sich die beiden Abstrahl- und Empfangsbereich A, B wiederum nicht überschneiden. Um Licht vom Leuchtelement S auf das Fotoelement E fallen zu lassen ist es erforderlich, einen Reflektor einzusetzen, der in der vorliegenden Figur nicht eingetragen ist, der jedoch vorzugsweise parallel zu der durch die Linsenkörper 1a, 1b definierten Ebene verläuft, und der innerhalb des zweiten, entfernteren Abstandsbereiches G angeordnet sein muss.

In Fig. 2 ist die vom Fotoelement E empfangene Lichtintensität I in Funktion des Abstandes in Richtung D dargestellt. Der Reflektor 12 kann innerhalb des Abstandsbereiches G verschoben werden und reflektiert dabei das Licht zurück auf das Fotoelement E, wobei die Intensität gemäss Fig. 1 von der Distanz D abhängt.

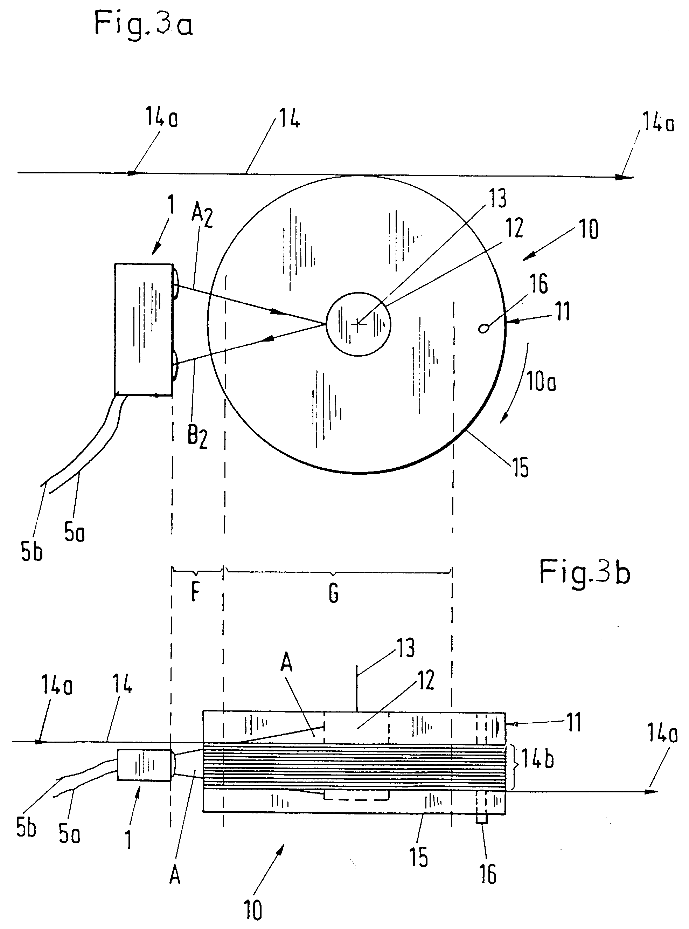

Fig. 3 zeigt eine Vorrichtung zur Förderung eines Schussfadens 14 einer Webmaschine. Die Schussfadenfördervorrichtung 10 ist als eine Förderrolle ausgebildet, die um eine Drehachse 13 drehbar gelagert ist. Die Förderrolle weist eine Mantelfläche 11 auf, auf der eine Mehrzahl von Windungen eines Schussfadens 14 aufgewickelt ist. Fig. 3b zeigt eine Aufsicht auf die Schussfadenfördervorrichtung 10, wobei der Schussfaden 14 in Förderrichtung 14a gefördert wird, und wobei mehrere Windungen des Schussfadens 14 auf der zylinderförmigen Oberfläche 11 aufliegen, derart dass sie dicht nebeneinander liegen und sich somit eine Wickelbreite 14b ergibt. Der Schussfaden 14 ist durch Drehen der Fläche 11 in Drehrichtung 10a in Förderrichtung 14a förderbar. Neben der Schussfadenfördervorrichtung 10 ist ein optischer Sensor 1 angeordnet, mit elektrischen Verbindungsleitungen 5a, 5b, wobei der optische Sensor einen Abstrahlbereich A aufweist, sowie einen abgegebenen Lichtstrahl-A2 und einen reflektierten Lichtstrahl B2. Im Ausführungsbeispiel ist der Reflektor 12 zylinderförmig ausgebildet, wobei er koaxial zur Drehachse 13 angeordnet ist und eine optisch reflektierende Aussenfläche aufweist, so dass der Lichtstrahl ausgehend vom optischen Sensor 1 durch die zylinderförmige Oberfläche 11 auf den Reflektor 12 trifft, von diesem reflektiert wird und wiederum durch die zylinderförmige Oberfläche 11 tretend in den optischen Sensor 1 eintritt. Der Abstrahlbereich A sowie der Empfangsbereich B sind wiederum derart gegenseitig angeordnet, dass sich ein erster Abstandsbereich F bildet, innerhalb dem der auf der Fördervorrichtung angeordnete Schussfaden 14 die Bereiche A, B durchquert. Somit lässt sich wiederum unabhängig von den Reflektionseigenschaften des Schussfadens 14 dessen Anwesenheit detektieren oder die Wickelbreite 14b des Schussfadenvorrates auf der Fadenfördervorrichtung 10 detektieren. Im vorliegenden Ausführungsbeispiel wird der Abstrahlbereich A vom zylinderförmigen Reflektor 12 linienförmig reflektiert, so dass die Wickelbreite 14b des Schussfadens 14 auf einfache Weise bestimmbar ist.

Die Fläche 11 muss im vorliegenden Ausführungsbeispiel aus einem für die Wellenlänge des verwendeten Lichtes transparenten Material bestehen. In einer weiteren nicht dargestellten Ausführungsvariante weist die Fördervorrichtung 10 in Drehrichtung 10a beabstandete Auflageelemente auf, die z.B. als einzelne dünne Röhrchen ausgestaltet sind, so dass der auf der Fördervorrichtung 10 aufliegende Schussfaden auf in Drehrichtung 10 beabstandeten Ablageelementen aufliegt, so dass der Schussfaden 14 polygonartig auf der Schussfadenfördervorrichtung 10 angeordnet ist. Ein Vorteil dieser Anordnung ist darin zu sehen, dass der Durchgang der rohrförmigen Stäbchen durch den Abstrahlbereich A bzw. durch den Empfangsbereich B mit einer geeigneten Auswerteelektronik 4 detektierbar ist, so dass über dieses Signal die Lage, die Drehzahl bzw. die Umfangsgeschwindigkeit der Fadenfördervorrichtung 10 bestimmbar ist. In Fig. 3a und Fig. 3b ist ein Ausführungsbeispiel eines Abdeckelementes 16 dargestellt, das derart an der Schussfadenfördervorrichtung 10 beziehungsweise an der Förderrolle 15 angeordnet ist, dass durch die Drehbewegung der Förderrolle 15 der Abstrahlbereich A und/oder der Empfindlichkeitsbereich B durchquert und dabei unterbrochen wird. Das Ausgangssignal 5a wird bei jedem Strahdurchtritt des Abdeckelementes 16 moduliert, sodass mit elektronischen Mitteln wie einer elektronischen Schaltung oder einem Rechner der Drehwinkel und/oder die Winkelgeschwindigkeit der Förderrolle 15 bestimmbar ist.

## Patentansprüche

1. Schussfadenfördervorrichtung, gekennzeichnet durch eine Förderrolle (15), die um eine Drehachse (13) drehbar gelagert ist, wobei die Förderrolle in Drehrichtung beabstandete Auflageelemente (16) zur Aufnahme einer Mehrzahl von Windungen eines Schussfadens (14) aufweist und durch eine Anordnung zum Abtasten von aufbringbaren Windungen, die einen Sensor (1) mit einem Leuchtelement (S), das Licht in einem Abstrahlbereich mit vorgegebenem Raumwinkel abstrahlt und mit einem lichtempfindlichen Element (E), das reflektiertes Licht in einem Empfindlichkeitsbereich mit vorgegebenen Raumwinkel empfängt und abhängig vom empfangenen Licht ein Ausgangssignal (5a) abgibt, wobei der Abstrahlbereich (A) und der Empfindlichkeitsbereich (B) derart gegenseitig ausgerichtet sind, dass sie sich, ausgehend vom Sensor (1), in einem ersten Abstandsbereich (F) nicht überschneiden und in einem zweiten, entfernteren Abstandsbereich (G) überschneiden und einen zylindrischen Reflektor (12) mit reflektierender Mantelfläche, die zwischen der Drehachse (13) und der Laufbahn der Auflageelemente (16) angeordnet ist, wobei der Sensor (1) und die Förderrolle (15) gegenseitig so angeordnet sind, dass die Laufbahn der Auflageelemente (16) im ersten Abstandsbereich und die reflektierende Mantelfläche des Reflektors (12) im zweiten Abstandsbereich liegt, wobei der Reflektor (12) das einfallende Licht linienförmig zum lichtempfindlichen Element zurückstrahlt und das lichtempfindliche Element (E) derart ausgestaltet ist, dass aus dem Ausgangssignal (5a) die Breite von auf die Auflageelemente (16) aufbringbaren Windungen eines Schussfadens (14) bestimmbar ist und wobei die Auflageelemente (16) dazu bestimmt sind, den Abstrahlbereich (A) und den Empfindlichkeitsbereich (B) zu durchqueren, sodass aus dem Ausgangssignal (5a) der Drehwinkel und/oder die Winkelgeschwindigkeit der Förderrolle (15) bestimmbar sowie die Funktion des Sensors (1) kontrollierbar ist.

2. Vorrichtung nach Anspruch 1, dadurch gekennzeichnet, dass das Leuchtelement (S) als Leuchtdiode (3) und das lichtempfindliche Element (E) als Fotoelement (3) ausgebildet ist.

3. Vorrichtung nach Anspruch 1 oder 2, dadurch gekennzeichnet, dass der Abstrahlbereich (A) des Leuchtelementes (S) und/oder der Empfindlichkeitsbereich (B) des lichtempfindlichen Elementes (E) asymmetrisch ausgestaltet ist.

4. Vorrichtung nach Anspruch 1, dadurch gekennzeichnet, dass der Reflektor (12) koaxial zur Drehachse (13) angeordnet ist.

5. Webmaschine mit einer Schussfadenfördervorrichtung nach einem der Ansprüche 1 bis 4.

## Claims

1. Weft thread conveying apparatus characterised by a conveying roll (15) which is rotatably journalled about an axis of rotation (13), with the conveying roll having support elements (16) spaced apart in the direction of rotation for receiving a plurality of turns of a weft thread (14) and by an arrangement for the sensing of turns . which can be applied and comprising a sensor (1) having a light emitting element (S) which radiates light into an irradiated region with a predetermined solid angle and a light sensitive element (E) which receives reflected light in a sensing region with a predetermined solid angle and transmits an output signal (5a) in dependence on the light received, wherein the irradiated region (A) and the sensing region (B) are mutually aligned so that, starting from sensor (1), they do not intersect one another in a first range of distances (F) and intersect in a more distant, second range of distances (G) and by a cylindrical reflector (12) with a reflecting jacket surface which is arranged between the axis of rotation (13) and the path of travel of the support elements (16), with the sensor (1) and the conveying roller (15) being so mutually arranged that the path of running of the support elements (16) lies in the first range of distances and the reflecting jacket surface of the reflector (12) lies in the second range of distances, with the reflector (12) reflecting the incident light linearly back to the light sensitive element and the light sensitive element (E) being designed so that the width of turns of a weft thread (14) which can be applied onto the support elements (16) can be determined from the output signal (5a) and wherein the support elements (16) are intended to cross through the irradiated region (A) and the sensing region (B), so that the angle of rotation and/or the angular speed of the conveying roll (15) can be determined from the output signal (5a) and also so that the function of the sensor (1) can be checked.

2. Apparatus in accordance with claim 1, characterized in that the light emitting element (S) is formed as a light emitting diode (3) and the light sensitive element is formed as a photoelement (3).

3. Apparatus in accordance with claim 1 or 2, characterized in that the irradiated region (A) of the light emitting element (S) and/or the sensing region (B) of the light sensitive element (E) are designed asymmetrically.

4. Apparatus in accordance with one of the claims 1 to 3, characterized in that the reflector (12) is coaxially arranged relative to the axis of rotation (13).

5. Weaving machine having a weft thread conveying apparatus in accordance with one of the claims 1 to 4.

## Revendications

1. Dispositif de convoyage de fil de trame, caractérisé par un rouleau de convoyage (15) qui est logé d'une manière tournante autour d'un axe de rotation (13), où le rouleau de convoyage présente des éléments de support (16) espacés dans la direction de rotation pour recevoir une pluralité de spires d'un fil de trame (14), et par un agencement pour balayer les spires applicables, avec un capteur (1) comportant un élément lumineux (S), qui fait rayonner la lumière dans une zone de rayonnement d'un angle spatial prédéterminé, et avec un élément sensible à la lumière (E) qui reçoit la lumière réfléchie dans une zone de sensibilité d'un angle spatial prédéterminé et émet en fonction de la lumière reçue un signal de sortie (5a), où la zone de rayonnement (A) et la zone de sensibilité (B) sont mutuellement orientées de façon que, en partant du capteur (1), elles ne se coupent pas dans une première zone d'écart (F) et se coupent dans une deuxième zone d'écart (G) plus éloignée, et un réflecteur cylindrique (12) avec une enveloppe réfléchissante qui est disposée entre l'axe de rotation (13) et la trajectoire des éléments de support (16), où le capteur (1) et le rouleau de convoyage (15) sont mutuellement disposés de façon que la trajectoire des éléments de support (16) se situe dans la première zone d'écart et l'enveloppe réfléchissante du réflecteur (12) dans la deuxième zone d'écart, où le réflecteur (12) renvoie la lumière incidente linéairement à l'élément sensible à la lumière et où l'élément sensible à la lumière (E) est réalisé de façon qu'il peut être déterminé à partir du signal de sortie (5a) la largeur des spires applicables sur les éléments de support (16) d'un fil de trame (14), et où les éléments de support (16) sont destinés à traverser la zone de rayonnement (A) et la zone de sensibilité (B) pour que, à partir du signal de sortie (5a), l'angle de rotation et/ou la vitesse angulaire du rouleau de convoyage (15) puisse être déterminé et la fonction du capteur (1) puisse être contrôlée.

2. Dispositif selon la revendication 1, caractérisé en ce que l'élément lumineux (S) est réalisé comme diode luminescente (3) et que l'élément sensible à la lumière (E) est réalisé comme élément photoélectrique (3).

3. Dispositif selon la revendication 1 ou 2, caractérisé en ce que la zone de rayonnement (A) de l'élément lumineux (S) et/ou la zone de sensibilité (B) de l'élément sensible à la lumière (E) sont réalisées d'une manière asymétrique.

4. Dispositif selon la revendication 1, caractérisé en ce que le réflecteur (12) est disposé coaxialement à l'axe de rotation (13).

5. Métier à tisser avec un dispositif de convoyage de fil de trame selon l'une des revendications 1 à 4.
